# FASCICULE DE BREVET EUROPEEN

(11) **EP 0 887 236 B1**
(45) Date de publication et mention de la délivrance du brevet: **12.06.2002**
(21) Numéro de dépôt: 98401516.4
(22) Date de dépôt: 22.06.1998
(51) Int. Cl.: B60R 19/20

(54) **Dispositifs à élements gonflables pour la protection des véhicules contre les chocs**
Vorrichtungen mit aufblasbaren Elementen zum Schutz von Fahrzeugen gegen Aufprälle
Devices comprising inflatable elements for protecting vehicles against shocks

(30) Priorité: 23.06.1997 FR 9707769
(43) Date de publication de la demande: 30.12.1998
(73) Titulaire: GEC ALSTHOM TRANSPORT SA, 75116 Paris (FR)
(72) Inventeur: Laporte, Jean-Jacques, 17000 La Rochelle (FR); Tassilly, Eric, 17137 l'Houmeau (FR); Muttin, Frédéric, 17000 La Rochelle (FR)
(74) Mandataire: Gosse, Michel

(56) Documents cités:
- DE-A- 2 153 941
- DE-A- 4 304 152
- DE-C- 3 913 660
- FR-A- 2 123 700

## Description

La présente invention concerne les éléments gonflables pour la protection des véhicules contre les chocs, en général, et porte, plus particulièrement, sur un dispositif à éléments gonflables pour la protection des véhicules contre les chocs.

Le dispositif à éléments gonflables pour la protection des véhicules contre les chocs de l'invention s'applique de préférence au domaine ferroviaire.

Par élément gonflable il faut ici comprendre tout élément du type sac gonflable plus couramment désigné, dans le domaine automobile, sous le nom de air bag.

Le document GB 2 020 234 montre la mise en oeuvre d'un dispositif à éléments gonflables à l'avant d'un véhicule ferroviaire.

Des générateurs de gaz sont utilisés pour l'ouverture des éléments gonflables.

Un tel dispositif est susceptible de protéger intégralement la partie avant du véhicule lors d'un choc.

Ce qui précède n'est toutefois pas le cas lorsque, lors d'une collision, l'objet venant percuter le dispositif à éléments gonflables se présente sous une direction autre que la direction perpendiculaire au plan vertical tangentiel aux éléments gonflables.

Dans un tel cas, et suivant l'angle de la direction de l'objet venant percuter le dispositif à éléments gonflables et la direction perpendiculaire au plan vertical tangentiel aux éléments gonflables, le niveau de protection peut être nul ou la protection peut être partielle du fait de l'effacement latéral entre éléments gonflables.

Aussi un but de l'invention est-il un dispositif à éléments gonflables pour la protection des véhicules contre les chocs, permettant d'optimiser les performances des éléments gonflables.

Par optimisation il faut comprendre que le ou les éléments gonflables qui recoivent le choc doivent se déformer de façon équilibrée, c'est à dire sans présenter de phénomèmes de flambement afin d'assurer l'absorption maximale d'énergie.

Conformément à l'invention, le dispositif à éléments gonflables pour la protection des véhicules contre les chocs est tel que défini dans les revendications.

Un avantage du dispositif à éléments gonflables pour la protection des véhicules contre les chocs de l'invention est une efficacité quel que soit l'objet rentrant en collision avec le véhicule équipé du dispositif de l'invention.

Un autre avantage du dispositif à éléments gonflables pour la protection des véhicules contre les chocs de l'invention est d'être sécuritaire du fait que si un élément gonflable ne se gonfle pas lors d'une collision, le dispositif à éléments gonflables garde des performances proche des performances du dispositif à éléments gonflables complet.

D'autres buts, caractéristiques et avantages de l'invention apparaîtront à la lecture de la description du mode de réalisation préféré du dispositif à éléments gonflables pour la protection des véhicules contre les chocs, description faite en liaison avec les dessins dans lesquels la figure unique est une vue générale du dispositif à éléments gonflables pour la protection des véhicules contre les chocs conforme à l'invention.

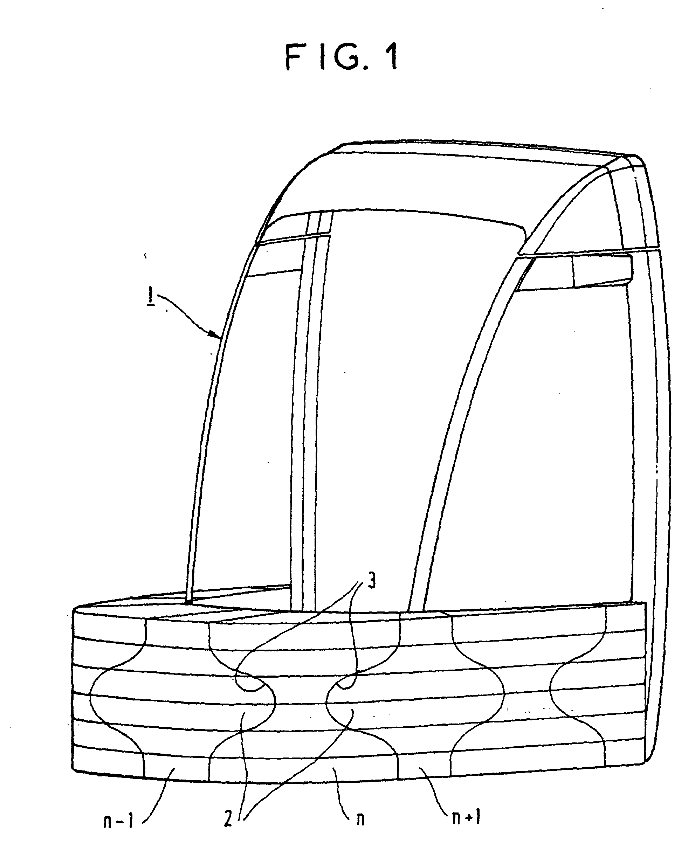

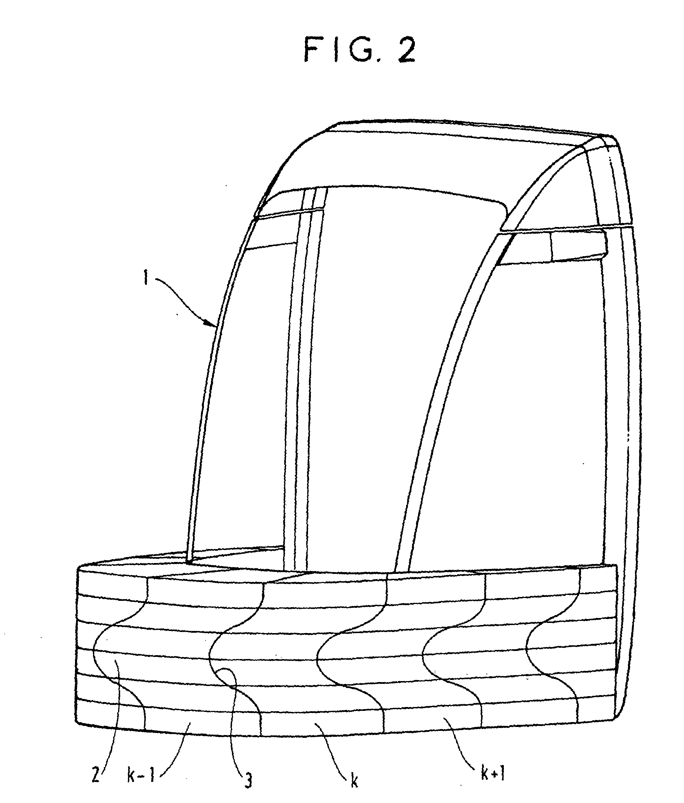

Le dispositif à éléments gonflables n, k pour la protection des véhicules 1 contre les chocs tel que représenté à la figure 1 comporte plusieurs éléments gonflables.

Les éléments gonflables une fois gonflés sont disposés les uns à côté des autres de manière à présenter une forme générale sensiblement identique à la forme générale de la zone du véhicule à protéger.

De plus, les éléments gonflables ont chacun une forme générale leur permettant de s'imbriquer avec les éléments gonflables directement adjacents.

Lors d'un impact, l'objet rentre en contact avec un ou plusieurs éléments gonflés.

Sous l'effet du choc, le ou les éléments gonflés se déforment.

Du fait de la structure du dispositif à éléments gonflés imbriqués latéralement les uns dans les autres, la déformation des éléments gonflés est minimale.

En effet, les éléments gonflés non soumis directement au choc bloquent la déformation du ou des éléments gonflés soumis directement au choc et optimisent la performance des éléments gonflables en bloquant l'espace autour de la zone du ou des éléments gonflés soumis aux contraintes.

De plus, la rugosité du matériau des éléments gonflables freine les déplacements relatifs entre ceux-ci.

Enfin, l'imbrication des éléments gonflables est telle que quel que soit l'objet entrant en collision avec le véhicule, les éléments gonflables ne s'effacent pas lors de l'impact.

Conformément au mode de réalisation préféré représenté à la figure unique, l'imbrication des éléments gonflables est obtenue en disposant successivement un élément gonflable du type mâle et un élément gonflable du type femelle.

Les éléments gonflables du type mâle comportent au moins une protubérance 2 sur ses faces latérales.

Les éléments gonflables du type femelle comportent au moins une cavité 3 sur ses faces latérales faisant face à la protubérance des éléments gonflables du type mâle.

Conformément à un autre mode de réalisation préféré, l'imbrication des éléments gonflables k est obtenue en disposant successivement des éléments gonflables dont l'une des faces latérales comporte au moins une protubérance 2 et dont l'autre face latérale comporte au moins une cavité 3.

Les faces latérales comportant au moins une protubérance 2 et appartenant à un élément gonflable k font face aux faces latérales comportant au moins une cavité 3 et appartenant à l'élément gonflable adjacent k-1.

## Revendications

1. Dispositif à éléments gonflables (..., n-1, n, n+1, ...; k-1, k, k+1, ...) pour la protection des véhicules (1) contre les chocs, **caractérisé en ce que**, une fois gonflés, lesdits éléments gonflables sont disposés les uns à côté des autres de manière à présenter une forme générale significativement identique à la forme générale de la zone du véhicule à protéger et **en ce que** lesdits éléments gonflables (n; k) ont chacun une forme générale leur permettant de s'imbriquer latéralement avec les deux éléments gonflables directement adjacents (n-1, n+1; k-1, k+1).

2. Dispositif selon la revendication 1, **caractérisé en ce que** l'imbrication des éléments gonflables (..., n-1, n, n+1, ...) est obtenue en disposant successivement un élément gonflable du type mâle (n-1) et un élément gonflable du type femelle (n).

3. Dispositif selon la revendication 2, **caractérisé en ce que** les éléments gonflables du type mâle (n-1, n+1) comportent au moins une protubérance (2) sur ses faces latérales et les éléments gonflables du type femelle (n) comportent au moins une cavité (3) sur ses faces latérales faisant face à la protubérance (2) des éléments gonflables du type mâle (n-1, n+1).

4. Dispositif selon la revendication 1, **caractérisé en ce que** l'imbrication des éléments gonflables (..., k-1, k, k+1, ...) est obtenue en disposant successivement des éléments gonflables (k) dont l'une des faces latérales comporte au moins une protubérance (2) et dont l'autre face latérale comporte au moins une cavité (3).

5. Dispositif selon la revendication 4, **caractérisé en ce que** les faces latérales comportant au moins une protubérance (2) et appartenant à un élément gonflable (k) font face aux faces latérales comportant au moins une cavité (3) et appartenant à l'élément gonflable adjacent (k-1).

## Patentansprüche

1. Vorrichtung mit aufblasbaren Elementen (..., n-1, n, n+1, ...; k-1, k, k+1, ...) zum Schutze von Fahrzeugen (1) gegen Zusammenstöße, **dadurch gekennzeichnet, daß** die aufblasbaren Elemente nach dem Aufblasen Seite an Seite so angeordnet sind, daß sie eine Grundform aufweisen, die im wesentlichen mit der Grundform der zu schützenden Zone des Fahrzeugs identisch ist, und dadurch, daß die aufblasbaren Elemente (n: k) jeweils eine Grundform aufweisen, durch die sie sich mit den beiden direkt benachbarten (n-1, n+1; k-1, k+1) aufblasbaren Elementen seitlich verzahnen lassen.

2. Vorrichtung nach Anspruch 1, **dadurch gekennzeichnet, daß** die Verzahnung der aufblasbaren Elemente (..., n-1, n, n+1,...) durch aufeinanderfolgendes Anordnen eines aufblasbaren Elements vom Steckertyp (n-1) und eines aufblasbaren Elementes vom Buchsentyp (n) erhalten wird.

3. Vorrichtung nach Anspruch 2, **dadurch gekennzeichnet, daß** die aufblasbaren Elemente vom Steckertyp (n-1, n+1) mindestens eine Ausstülpung (2) auf ihren Seitenflächen aufweisen und die aufblasbaren Elemente vom Buchsentyp (n) mindestens einen Hohlraum (3) auf ihren Seitenflächen aufweisen, der der Ausstülpung (2) der aufblasbaren Elemente vom Steckertyp (n-1, n+1) gegenüber liegt.

4. Vorrichtung nach Anspruch 1, **dadurch gekennzeichnet, daß** die Verzahnung der aufblasbaren Elemente (..., k-1, k, k+1, ...) durch aufeinanderfolgende Anordnung der aufblasbaren Elemente (k). deren eine Seitenfläche mindestens eine Ausstülpung (2) und deren andere Seitenfläche mindestens einen Hohlraum (3) aufweist, erhalten wird.

5. Vorrichtung nach Anspruch 4, **dadurch gekennzeichnet, daß** die Seitenflächen, die mindestens eine Ausstülpung (2) aufweisen und zu einem aufblasbaren Element (k) gehören, den Seitenflächen gegenüberliegen, die mindestens einen Hohlraum (3) aufweisen und zu dem benachbarten aufblasbaren Element (k-1) gehören.

## Claims

1. A device with inflatable members (..., n-1, n, n+1, ...; k-1, k, k+1, ...) for protecting vehicles (1) against impacts **characterized in that**, once inflated, said inflatable members are disposed alongside each other so as to have a general shape substantially identical to the general shape of the area of the vehicle to be protected and **in that** said inflatable members (n; k) each have a general shape enabling them to be interleaved laterally with the two directly adjacent inflatable members (n-1, n+1; k-1, k+1).

2. A device according to claim 1 **characterized in that** interleaving of the inflatable members (..., n-1, n, n+1, ...) is obtained by disposing in succession a male type inflatable member (n-1) and a female type inflatable member (n).

3. A device according to claim 2 **characterized in that** the male type inflatable members (n-1, n+1) have at least one protuberance (2) on their lateral faces and the female type inflatable members (n) have at least one cavity (3) on their lateral faces which faces the protuberance (2) of the male type inflatable members (n-1, n+1).

4. A device according to claim 1 **characterized in that** interleaving of the inflatable members (..., k-1, k, k+1, ...) is obtained by disposing in succession inflatable members (k) of which one lateral face has at least one protuberance (2) and the other lateral face has at least one cavity (3).

5. A device according to claim 4 **characterized in that** the lateral faces having at least one protuberance (2) and belonging to one inflatable member (k) face the lateral faces having at least one cavity (3) belonging to the adjacent inflatable member (k-1).
